# EUROPÄISCHE PATENTSCHRIFT

(11) **EP 1 767 262 B1**
(45) Veröffentlichungstag und Bekanntmachung des Hinweises auf die Patenterteilung: **06.08.2008**
(21) Anmeldenummer: 06115216.1
(22) Anmeldetag: 09.06.2006
(51) Int. Cl.: B01F 3/04, A23L 2/54, B67D 1/00, B67D 1/04

(54) **Verfahren und Vorrichtung zur Karbonisierung von Wasser in einer Getränkezapfanlage**
Method and device for carbonating water in a drink dispenser
Procédé et appareil de saturation d'acide carbonique de l'eau dans un distributeur de boissons

(30) Priorität: 21.09.2005 DE 102005045157
(43) Veröffentlichungstag der Anmeldung: 28.03.2007
(73) Patentinhaber: Friedhelm Selbach Gmbh, 42477 Radevormwald (DE)
(72) Erfinder: Selbach, Friedhelm, 42477 Radevormwald (DE)
(74) Vertreter: Müller, Enno

(56) Entgegenhaltungen:
- DE-A1- 19 611 093
- GB-A- 1 314 832
- GB-A- 1 494 744
- GB-A- 2 059 791
- US-A- 2 391 003
- US-A- 3 172 736
- US-A- 5 231 851

## Beschreibung

Die Erfindung betrifft zunächst ein Verfahren zur Carbonisierung von Wasser nach den Merkmalen der Oberbegriffes des Anspruchs 1.

Verfahren der in Rede stehenden Art sind bekannt. Diese sind dem Fachmann auch als Postmix-Verfahren bekannt, mittels welchem herkömmliches Leitungswasser mit Kohlendioxid carbonisierbar und im Weiteren mit Fruchtsaftkonzentraten oder dergleichen mischbar ist. So sind weiter Verfahren bekannt, bei welchen das mit CO₂ versetzte Wasser mittels einer Pumpe im ständigen Kreislauf geführt wird, so weiter insbesondere zum ständigen Durchlauf des carbonisierten Wassers durch eine Kühlanlage. Diesbezüglich wird auf die nicht vorveröffentlichte Patentanmeldung DE 102005031935 der Anmelderin verwiesen. Die Entnahme aus dem Kreislauf erfolgt hierbei im Bereich einer Leitungskehre der Kreisleitung. Entsprechend der Entnahmemenge wird mit CO₂ versetztes Wasser in den Kreislauf nachgeführt. Hierzu dient ein mit Bezug zu dem Kreislauf externer Carbonator, in welchem das Frischwasser mit CO₂ versetzt hiernach dem Kreislauf zugeführt wird.

Aus der GB 1 494 744 A ist ein Verfahren bekannt, bei welchem frisch zugeführtes Wasser über eine Sprüheinrichtung in ein eine CO₂-Atmosphäre in einem Wasser-Freispiegel ausbildenden Gefäß eingebracht wird. Bei jeder Zuführung von Frischwasser durchläuft dieses die Sprüheinrichtung und wird entsprechend carbonisiert.

Ausgehend von dem zuletzt genannten Stand der Technik stellt sich der Erfindung die Aufgabe, ein Verfahren wie eingangs vorausgesetzt anzugeben, das insbesondere hinsichtlich der zu erreichenden Carbonisierung des Wassers verbessert ist.

Diese Aufgabe ist bei dem Gegenstand des Anspruchs 1 gelöst, wobei darauf abgestellt ist, dass die Versprüheinrichtung zur unmittelbaren Einspeisung des Wasser in das Gefäß umgangen wird. Infolgedessen ist eine verbesserte CO₂-Beimengung erreicht. Die Versprüheinrichtung kann wahlweise zur unmittelbaren Einspeisung des Wassers in das Gefäß umgangen werden. Im üblichen Betrieb, d.h. im üblichen unbeeinflussten Kreislauf des carbonisierten Wassers, kann die Versprüheinrichtung in dem Gefäß umgangen werden. Zufolge dieses Verfahrens ist eine verbesserte CO₂-Beimengung erreicht. Bedingt durch das vorgeschlagene Versprühen des Wassers bietet sich zur Zusammenwirkung mit dem Kohlendioxid eine vergrößerte Wirk-Oberfläche. Das die Versprüheinrichtung aufweisende Gefäß ist in den Kreislauf integriert, wobei im üblichen Betrieb, d.h. im üblichen unbeeinflussten Kreislauf des carbonisierten Wassers die Versprüheinrichtung in dem Gefäß umgangen wird. Zufolge dieses Verfahrens kann auch bei Bedarf bereits carbonisiertes Wasser erneut mittels der Versprüheinrichtung innerhalb des Gefäßes mit CO₂ versetzt werden, so beispielsweise zur Erlangung eines erhöhten Sättigungsgrades.

In einer Weiterbildung ist vorgesehen, dass das Wasser mittels einer korrosionsfesten Pumpe im Kreislauf geführt wird, wobei die Materialwahl dahingehend gerichtet ist, dass sowohl carbonisiertes als auch noch nicht carbonisiertes Wasser mittels der Pumpe bewegt werden kann. So ist bevorzugt eine Edelstahl-Drehschieberpumpe vorgesehen, welche mehrstufig wirkt. Die Umgehung der Versprüheinrichtung wird mittels einer gesonderten in das Gefäß mündenden Leitung durchgeführt. Diese gesonderte Leitung ist zu der Leitung, welche zur Versprüheinrichtung führt, entkoppelbar derart, dass das im Kreislauf geführte Wasser nur entweder durch die eine oder andere Leitung bewegt wird. So ist eine gezielte Versprühung bzw. ein gezieltes Umgehen der Versprüheinrichtung erreichbar. Bei geöffneter gesonderter Leitung wird die Wasserführung durch die gesonderte Leitung mittels eines Durchflusswiderstandes beeinflusst, welcher Durchflusswiderstand im Verhältnis zum Durchflusswiderstand in der im Wesentlichen parallel geschalteten Versprüheinrichtung wesentlich kleiner ist. Bei einer Entnahme carbonisierten Wassers über eine Zapfanlage fließt eine entsprechende Menge an Reinwasser in den Kreislauf nach. So wird bevorzugt stromaufwärts zu der Pumpe Reinwasser eingespeist. Es bedarf zufolge des erfindungsgemäßen Verfahrens entsprechend nur des Einsatzes einer Pumpe, die sowohl das carbonisierte Wasser im Kreislauf hält als auch der Förderung des eingespeisten Reinwassers dient.

Die Erfindung betrifft des Weiteren eine Anordnung zur Vermischung von CO₂ mit Wasser nach den Merkmalen des Oberbegriffes des Anspruches 6.

Eine Anordnung der in Rede stehenden Art ist aus der eingangs zitierten Literatur bekannt.

Im Hinblick auf den genannten Stand der Technik liegt der Erfindung insoweit die Aufgabe zugrunde, eine Anordnung der genannten Art anzugeben, die eine vorteilhafte CO₂-Sättigung des Wassers erreichen lässt.

Diese Aufgabe ist beim Gegenstand des Anspruchs 6 gelöst, wobei darauf abgestellt ist, dass eine wahlweise freigebbare Umgehungseinrichtung für die Versprüheinrichtung vorgesehen ist, zur umgehenden Einspeisung von Wasser in das Gefäß. Das Gefäß ist Bestandteil des Sodawasser-Kreislaufes, zufolge dessen selbst bereits mit CO₂ versetztes Wasser mittels der in dem Gefäß vorgesehenen Versprüheinrichtung nochmals carbonisiert werden kann. Durch die Versprüheinrichtung wird das über dem Wasser-Freispiegel eingedüste Wasser zerstäubt. Innerhalb der CO₂ -Atmosphäre diffundiert das CO₂ in die erzielten Wassertröpfchen und bildet so das carbonisierte Wasser. Ist keine Versprühung und somit keine Carbonisierung gewünscht bzw. erforderlich, so wird die Umgehungseinrichtung freigegeben. Das carbonisierte Wasser wird hierbei in üblicher Weise im Kreislauf gehalten, dies unter Einbeziehung der in dem Gehäuse befindlichen Wassermenge. Es findet entsprechend ein steter Austausch des in dem Gefäß befindlichen Wasservorrates statt.

In einer vorteilhaften Weiterbildung der Anordnung ist vorgeschlagen, dass zur Außerwirksetzung der Versprüheinrichtung eine unmittelbar in das Gefäß mündende Umgehungsleitung, umgehend der zur Versprüheinrichtung führenden Versprühleitung, vorgesehen ist. Hierbei kann es sich um eine Anordnung handeln, bei welcher die Umgehungsleitung und die zur Versprüheinrichtung führende Versprühleitung in koaxialer Anordnung vorgesehen sind. Alternativ sind diese Leitungen, wie weiter auch bevorzugt, gesondert zueinander vorgesehen. Die Umgehungsleitung mündet ferner in dem Gefäß unterhalb des Wasser-Freispiegels, womit ein in sich geschlossener Wasser-Kreislauf erreicht ist, wobei das Gehäuse im übertragenen Sinne einen Leitungsabschnitt der Kreisleitung ausformt. Die beiden Leitungen - Umgehungsleitung und Versprühleitung - sind wechselweise schaltbar, wobei in einem Normalbetrieb, dass heißt bei üblichem im Kreislauf bewegten Sodawasser, die Versprühleitung geschlossen und die Umgehungsleitung geöffnet ist. Hierzu ist in der Umgehungsleitung ein Absperrventil angeordnet. Dieses wird geschaltet, sofern eine Versprühung in dem Gefäß erreicht werden soll. So ist in einer Weiterbildung des Erfindungsgegenstandes vorgesehen, dass das Absperrventil als Magnetventil ausgebildet ist. Dieses Absperrventil ist im unbetätigten, d.h. stromlosen Zustand offen, was den Normalbetrieb wie zuvor bedarstellt. Da die Versprühleitung einen deutlich höheren Strömungswiderstand aufweist als die Umgehungsleitung stellt sich die Versprühleitung bei geöffnetem Absperrventil der Umgehungsleitung als Hindernis dar, zufolge dessen im Normalzustand ein Durchfluss durch die Umgehungsleitung erreicht ist. Erst durch Sperren der Umgehungsleitung mittels des Absperrventils erfolgt ein Durchströmen der Versprühleitung. In vorteilhafter Weise ist die Aufteilung der das Wasser im Kreislauf führenden Kreisleitung in die Versprühleitung und die Umgehungsleitung stromabwärtig zu der Pumpe ausgebildet, zufolge dessen sowohl die Versprühleitung als auch die Umgehungsleitung auf der Überdruckseite der Pumpe platziert sind. Auch ist hierdurch der Transport des Wassers sowohl durch die Versprühleitung als auch durch die Umgehungsleitung mit nur einer Pumpe erreicht.

Nachstehend ist die Erfindung anhand der beigefügten Zeichnung, welche lediglich ein Ausführungsbeispiel darstellt, näher erläutert.

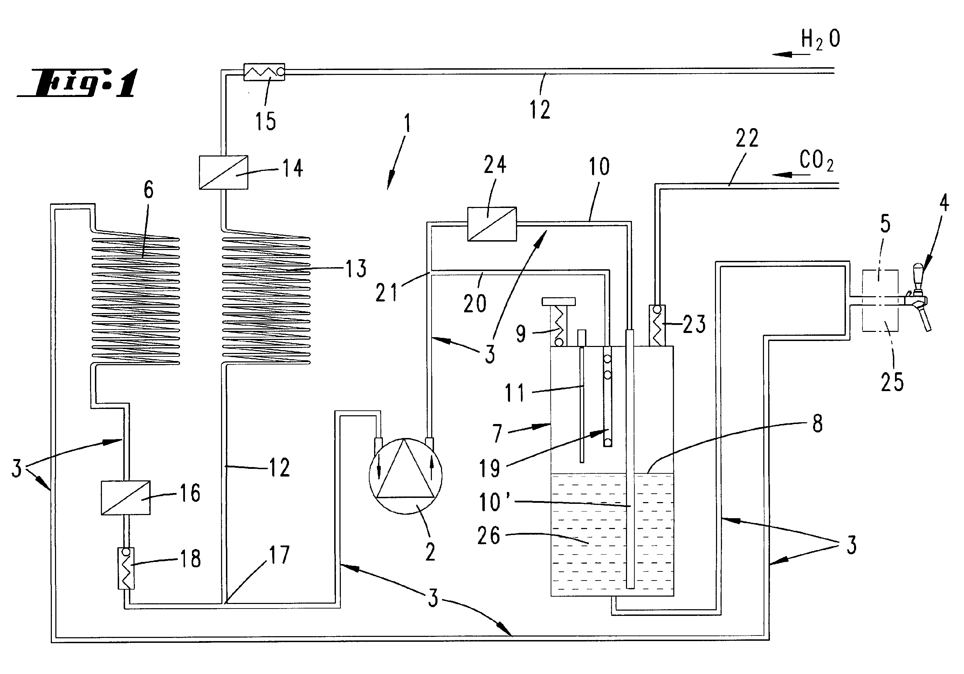

So zeigt die Darstellung in Fig. 1 eine Anordnung 1 zur Vermischung von CO₂ mit Wasser in einer Getränkezapfanlage. Das kohlendioxiddurchsetzte Wasser ist im Kreislauf geführt. Zur Förderung dieses Gemisches dient eine Förderpumpe 2 in Form einer Edelstahl-Drehschieberpumpe, die den notwendigen Druckaufbau innerhalb der Kreisleitung 3 erbringt.

Zur Entnahme des stets im Kreislauf bewegten, carbonisierten Wassers ist eine übliche Zapfanlage 4 mit einem oder mehreren Zapfhähnen vorgesehen. Die zu den Zapfhähnen führende Leitung 25 zweigt von der Kreisleitung 3 ab. Über eine nicht näher dargestellte Mischanordnung 5 kann dem zu zapfenden Sodawasser Fruchtsaftkonzentrat oder dergleichen beigemischt werden.

In die Kreisleitung 3 integriert ist eine Kühlschlange 6, zur, mit Bezug auf die Strömungsrichtung des Wassers bezogenen, Nachkühlung. Diese Nachkühlschlange 6 ist unterdruckseitig der Pumpe 2 platziert.

Überdruckseitig der Pumpe 2 ist ein in den Kreislauf integriertes Gefäß 7 vorgesehen. Dieses weist ein bedingt durch die Kreislaufströmung stets sich austauschendes Wasserreservoir 26 auf, mit einem Wasser-Freispiegel 8, über welchem eine CO₂ -Atmosphäre gebildet ist. Es handelt sich hierbei um ein nicht offenes Gefäß 7, welches mit einem deckenseitigen, d.h. der CO₂ -Atmosphäre zugeordneten Überdruckventil 9 versehen ist.

Das Gefäß 7 ist Teil des Kreislaufes, wozu ein Teilabschnitt der Kreisleitung 3, eine Umgehungsleitung 10 ausformend deckenseitig in das Gefäß 7 eintritt, wobei die Mündung dieser Umgehungsleitung 10 unterhalb des Wasser-Freispiegels 8 positioniert ist. Konkret ist die Mündung der Umgehungsleitung 10 mit geringem Abstand zur gefäßinnenseitigen Oberfläche des Gefäßbodens platziert.

Der sich in dem Gefäß 7 erstreckende Teilabschnitt 10' der Umgehungsleitung 10 ist gegenüber dem Restabschnitt durchmesservergrößert.

Im Gefäßbodenbereich und dementsprechend im Bereich der tiefsten Gefäßstelle ist eine Gefäßableitung der Kreisleitung 3 vorgesehen.

Das Niveau des in dem Gefäß 7 vorgesehenen Wasserreservoirs bzw. die Höhe des Wasser-Freispiegels 8 wird ständig kontrolliert mittels einer Füllstandselektrode 11. Ergibt die Messung einen zu geringen Füllstand, so wird in die Kreisleitung 3 Frischwasser zugeleitet.

Hierzu ist eine gesonderte Reinwasser-Leitung 12 vorgesehen, die stromaufwärts, d.h. auf der Unterdruckseite der Pumpe 2 in die Kreisleitung 3 mündet. In dieser Reinwasser-Leitung 12 ist eine weitere Kühlschlange 13 eingebunden, zur Vorkühlung des einzuleitenden Reinwassers, bevorzugt auf die Kühltemperatur des in der Kreisleitung 3 befindlichen, in der Regel bereits carbonisierten Wassers.

Zur Zuführung von Reinwasser wird die entsprechende Leitung 12 freigeschaltet, dies bei gleichzeitiger Sperrung des mit Bezug auf den Reinwasser-Einleitungspunkt (Abzweig 17) in die Kreisleitung 3 stromaufwärts verbleibenden Kreisleitungsabschnittes. So ist in der Reinwasser-Leitung 12 in Strömungsrichtung vorgeschaltet der Kühlschlange 13 ein Magnetventil 14 vorgesehen, welchem weiter ein doppelt wirkender Rückflussverhinderer 15 vorgeschaltet ist. Das Magnetventil 14 ist im stromlosen Zustand geschlossen. Es bedarf entsprechend einer aktiven Ansteuerung zur Durchflussfreigabe des Reinwassers, welches aufgrund der gewählten Ventilpositionierung erst unmittelbar vor Einlauf in die Kreisleitung 3 gekühlt wird.

Mit Aktivierung des Reinwasser-Magnetventils 14 erfolgt eine zeitgleiche Aktivierung eines kreisleitungsseitigen Magnetventils 16. Dieses ist im Kreisleitungsabschnitt zwischen der Nachkühlschlange 6 und dem Einleitungs-Abzweig 17 zur Reinwasser-Leitung 12 geschaltet. Dieses Kreisleitungs-Magnetventil 16 ist in der stromlosen Stellung, d.h. im Normalbetrieb, geöffnet, dies bei gleichzeitigem stromlosen Verschluss des reinwasser-leitungsseitigen Magnetventils 14.

Zwischen Magnetventil 16 und dem Abzweig 17 ist ein weiterer Rückflussverhinderer 18 angeordnet.

Teil der Anordnung 1 ist auch eine Vorrichtung zur Carbonisierung des Wassers, welche Vorrichtung ebenfalls in den Kreislauf eingebunden ist.

Die Carbonisierung erfolgt in dem Gefäß 7 oberhalb des Wasser-Freispiegels 8.

Eine den Gefäßdeckel durchsetzende Versprüheinrichtung 19 erstreckt sich in dem oberhalb des Wasser-Freispiegels 8 belassenen Freiraum des Gefäßinneren; ist zudem mit seinem vom Gefäßdeckel abweisenden Ende zu dem Wasser-Freispiegel 8 beabstandet.

Gefäßaußenseitig geht die Versprüheinrichtung 19 über in eine parallel zu dem die Umgehungsleitung 10 ausbildenden Teilabschnitt der Kreisleitung 3 geschaltete Versprühleitung 20.

Der Abzweig 21 aus der Kreisleitung 3 in die Versprühleitung 20 und die Umgehungsleitung 10 ist stromabwärtig zu der Pumpe 2, d.h. überdruckseitig derselben ausgebildet.

Des Weiteren ist zu dem Gefäß 7 eine deckelseitig mündende CO₂ -Leitung 22 vorgesehen, über welche, ein weiteres Rückschlagventil 23 überwindend Kohlendioxid in den Gefäßfreiraum oberhalb des Wasser-Freispiegels 8 einströmen kann.

Die Carbonisierung des Wassers erfolgt in bekannter Weise, indem das ggf. bereits carbonisierte, im Kreislauf bewegte Wasser durch die Versprüheinrichtung 19 in der CO₂ -Atmosphäre des Gehäuses 7 zerstäubt wird. Das zugeleitete Kohlendioxid diffundiert in die Wassertröpfchen und bildet so carbonisiertes Wasser (Sodawasser).

Es ist eine wahlweise Schaltung der Versprühleitung 20 oder der Umgehungsleitung 10 vorgesehen. So ist im Normalfall, d.h. bei üblichem Kreislauf des Wassers die Umgehungsleitung 10 geschaltet und der Weg durch die Versprühleitung 20 gesperrt. Dies ist in einfachster Weise durch die gegebenen Druckunterschiede erreicht. Da die Versprühleitung 20 zufolge der nachgeschalteten Versprüheinrichtungen 19 einen deutlich höheren Strömungswiderstand aufweist als die parallel hierzu geschaltete Umgehungsleitung 10, ist letztere ohne gezielten äußeren Einfluss stets geschaltet.

Dieser äußere Einfluss wird erreicht durch ein in der Umgehungsleitung 10, stromabwärts des Abzweiges 21 geschaltetes Magnetventil 24. Dieses ist im stromlosen Zustand, d.h. im Normalfall, geöffnet.

Eine Versprühung bzw. Carbonisierung des Wassers wird in einfachster Weise durch Schließen des Magnetventils 24 erreicht, da hiernach das weiter durch die Pumpe 2 im Kreislauf gehaltene Wasser durch die Versprühleitung 20 und die nachgeschaltete Versprüheinrichtung 19 gedrückt wird.

Zufolge der Anordnung der Versprüheinrichtung 19 integriert in die Kreisleitung 3 wird auch ggf. bereits carbonisiertes Wasser nochmals mit CO₂ versetzt, dies bspw. zur Erlangung einer höheren Sättigung.

## Patentansprüche

1. Verfahren zur Carbonisierung von Wasser in einer Getränkezapfanlage, wobei mit CO₂ versetztes Wasser im Kreislauf geführt wird und eine Anreicherung von CO₂ durch Versprühen in einer Versprüheinrichtung (19) von ggf. selbst bereits mit CO₂ versetztem Wasser in einem eine CO₂ -Atmosphäre in einem Wasser-Freispiegel (8) ausbildenden Gefäß (7) durchgeführt wird, **dadurch gekennzeichnet, dass** die Versprüheinrichtung (19) wahlweise zur unmittelbaren Einspeisung des Wassers in das Gefäß (7) umgangen wird.

2. Verfahren nach Anspruch 1, **dadurch gekennzeichnet, dass** das Wasser mittels einer korrosionsfesten Pumpe (2) im Kreislauf geführt wird.

3. Verfahren nach Anspruch 1 oder 2, **dadurch gekennzeichnet, dass** die Umgehung der Versprüheinrichtung (19) mittels einer gesonderten in das Gefäß (7) mündenden Leitung (10) durchgeführt wird.

4. Verfahren nach Anspruch 3, **dadurch gekennzeichnet, dass** bei geöffneter, gesonderter Leitung (10) die Wasserführung durch die gesonderte Leitung (10) mittels eines Durchflusswiderstandes beeinflusst wird.

5. Verfahren nach einem der Ansprüche 2 bis 4, **dadurch gekennzeichnet, dass** in den Kreislauf stromaufwärts zu der Pumpe (2) Reinwasser eingespeist wird.

6. Anordnung (1) zur Vermischung von CO₂ mit Wasser, wobei das CO₂ in eine mit mindestens einem oder mehreren Zapfhähnen verbundene Kreisleitung (3) eingegeben wird, in welcher Kreisleitung (3) eine Förderpumpe (2) angeordnet ist, wobei weiter ein einen Wasser-Freispiegel (8) ausbildendes Gefäß (7) mit einer darüber befindlichen CO₂ - Atmosphäre vorgesehen ist, mit einer darin befindlichen Versprüheinrichtung (19) zum Versprühen von ggf. mit CO₂ versetztem Wasser, **dadurch gekennzeichnet, dass** eine wahlweise freigebbare Umgehungseinrichtung für die Versprüheinrichtung (19) vorgesehen ist, zur umgehenden Einspeisung von Wasser in das Gefäß (7).

7. Anordnung nach Anspruch 6 , **dadurch gekennzeichnet, dass** zur Außerwirksetzung der Versprüheinrichtung (19) eine unmittelbar in das Gefäß (7) mündende Umgehungsleitung (10), umgehend der zur Versprüheinrichtung (19) führenden Versprühleitung (20), vorgesehen ist.

8. Anordnung nach Anspruch 7 , **dadurch gekennzeichnet, dass** die Umgehungsleitung (10) in dem Gefäß (7) unterhalb des Wasser-Freispiegels (8) mündet.

9. Anordnung nach einem der Ansprüche7 oder 8, **dadurch gekennzeichnet, dass** in der Umgehungsleitung (10) ein Absperrventil angeordnet ist.

10. Anordnung nach Anspruch 9, **dadurch gekennzeichnet, dass** das Absperrventil als Magnetventil (24) ausgebildet ist.

11. Anordnung nach einem der Ansprüche 9 oder 10, **dadurch gekennzeichnet, dass** das Absperrventil im unbetätigten Zustand offen ist.

12. Anordnung nach einem der Ansprüche 7 bis 11, **dadurch gekennzeichnet, dass** die Versprühleitung (20) einen deutlich höheren Strömungswiderstand aufweist als die Umgehungsleitung (10).

13. Anordnung nach einem der Ansprüche 7 bis 12, **dadurch gekennzeichnet, dass** eine Aufteilung der das Wasser im Kreislauf führenden Kreisleitung (3) in die Versprühleitung (20) und die Umgehungsleitung (10) stromabwärtig zu der Pumpe (2) ausgebildet ist.

## Claims

1. Method for carbonating water in a drink dispenser, wherein water mixed with CO₂ is circulated and enrichment of CO₂ is carried out by atomisation in an atomising device (19) of water possibly itself already mixed with CO₂ in a vessel (7) forming a CO₂ atmosphere in an open water surface (8), **characterised in that** the atomising device (19) is optionally bypassed for the direct feeding of the water into the vessel (7).

2. Method according to claim 1, **characterised in that** the water is circulated by means of a corrosion-resistant pump (2) .

3. Method according to claim 1 or 2, **characterised in that** the bypassing of the atomising device (19) is carried out by means of a separate conduit (10) running into the vessel (7).

4. Method according to claim 3, **characterised in that** when the separate conduit (10) is open the passage of water through the separate conduit (10) is controlled by means of a flow resistor.

5. Method according to any of claims 2 to 4, **characterised in that** pure water is fed into the circulating flow upstream relative to the pump (2).

6. Arrangement (1) for mixing CO₂ with water, wherein the CO₂ is fed into a closed circuit (3) connected to at least one or more taps, in which closed circuit (3) a feed pump (2) is arranged, wherein further a vessel (7) forming an open water surface (8) is provided with a CO₂ atmosphere located over it having located therein an atomising device (19) for atomising water possibly mixed with CO₂, **characterised in that** an optionally openable bypass device for the atomising device (19) is provided for the bypass feed of water into the vessel (7).

7. Arrangement according to claim 6, **characterised in that** for putting the atomising device (19) out of action a bypass line (10) running directly into the vessel (7) and bypassing the atomising line (20) leading to the atomising device (19) is provided.

8. Arrangement according to claim 7, **characterised in that** the bypass line (10) runs beneath the open water surface (8) in the vessel (7).

9. Arrangement according to one of claims 7 or 8, **characterised in that** a check valve is arranged in the bypass line (10).

10. Arrangement according to claim 9, **characterised in that** the check valve is constructed in the form of a magnetically controlled valve (24).

11. Arrangement according to one of claims 9 or 10, **characterised in that** the check valve in the unactuated state is open.

12. Arrangement according to any of claims 7 to 11, **characterised in that** the atomising line (20) exhibits markedly higher flow resistance than the bypass line (10).

13. Arrangement according to any of claims 7 to 12, **characterised in that** partitioning of the closed circuit (3) carrying the circulating water into the atomising line (20) and the bypass line (10) is constructed downstream relative to the pump (2).

## Revendications

1. Procédé de saturation en acide carbonique de l'eau dans un distributeur de boissons, dans lequel de l'eau mélangée à du CO₂ est mise en circulation et un enrichissement en CO₂ est effectué par pulvérisation dans un dispositif de pulvérisation (19) d'eau, le cas échéant elle-même déjà mélangée à du CO₂, dans une atmosphère de CO₂ dans un récipient (7) constituant un niveau libre d'eau (8), **caractérisé en ce que** le dispositif de pulvérisation (19) est au choix contourné afin de procéder à une injection directe de l'eau dans le récipient (7).

2. Procédé selon la revendication 1, **caractérisé en ce que** l'eau est mise en circulation au moyen d'une pompe (2) résistant à la corrosion.

3. Procédé selon la revendication 1 ou 2, **caractérisé en ce que** le contournement du dispositif de pulvérisation (19) est effectué au moyen d'une conduite (10) séparée, débouchant dans le récipient (7).

4. Procédé selon la revendication 3, **caractérisé en ce que**, lorsque la conduite (10) séparée est ouverte, le guidage de l'eau par la conduite (10) séparée est influencé par le biais de la résistance opposée à l'écoulement.

5. Procédé selon l'une des revendications 2 à 4, **caractérisé en ce que** de l'eau pure est injectée dans le circuit, en amont de la pompe (2).

6. Dispositif (1) pour mélanger du CO₂ à de l'eau, dans lequel le CO₂ est injecté dans une conduite de circuit (3), reliée à au moins un ou plusieurs robinets de soutirage, conduite de circuit (3) dans laquelle est disposée une pompe de transfert (2), où, en outre, un récipient (7) constituant un niveau libre d'eau (8) avec une atmosphère de CO₂ au-dessus de lui est prévu, et avec un dispositif de pulvérisation (19) y étant installé pour pulvériser de l'eau, le cas échéant elle-même déjà mélangée à du CO₂, **caractérisé en ce qu'**un dispositif de contournement pouvant être déclenché au choix est prévu pour le dispositif de pulvérisation (19), de manière à injecter en un mode contourné de l'eau dans le récipient (7).

7. Dispositif selon la revendication 6, **caractérisé en ce qu'**une conduite de contournement (10), débouchant directement dans le récipient (7) et contournant la conduite de pulvérisation (20) menant au dispositif de pulvérisation (19), est prévue pour mettre hors d'effet le dispositif de pulvérisation (19).

8. Dispositif selon la revendication 7, **caractérisé en ce que** la conduite de contournement (10) débouche dans le récipient (7), au-dessous du niveau libre d'eau (8).

9. Dispositif selon l'une des revendications 7 ou 8, **caractérisé en ce qu'**une soupape d'isolement est disposée dans la conduite de contournement (10).

10. Dispositif selon la revendication 9, **caractérisé en ce que** la soupape d'isolement est réalisée sous forme d'électrovanne (24).

11. Dispositif selon l'une des revendications 9 ou 10, **caractérisé en ce que** la soupape d'isolement est ouverte à l'état non actionné.

12. Dispositif selon l'une des revendications 7 à 11, **caractérisé en ce que** la conduite de pulvérisation (20) présente une résistance à l'écoulement nettement supérieure à la conduite de contournement (10).

13. Dispositif selon l'une des revendication 7 à 12, **caractérisé en ce qu'**une subdivision de la conduite de circuit (3) guidant l'eau en circulation en la conduite de pulvérisation (20) et la conduite de contournement (10) est réalisée en aval de la pompe (2).
